# EUROPÄISCHE PATENTSCHRIFT

(11) **EP 0 946 331 B1**
(45) Veröffentlichungstag und Bekanntmachung des Hinweises auf die Patenterteilung: **14.01.2004**
(21) Anmeldenummer: 97951867.7
(22) Anmeldetag: 06.11.1997
(51) Int. Cl.: B23K 35/38, B23K 26/12

(54) **VERFAHREN UND PROZESSGAS ZUM LASERSCHWEISSEN VON METALLISCHEN WERKSTÜCKEN**
METHOD AND PROCESS GAS FOR LASER WELDING METAL WORK PIECES
PROCEDE ET GAZ DE PROCESSUS POUR LE SOUDAGE AU LASER DE PIECES METALLIQUES

(30) Priorität: 06.11.1996 DE 19645746
(43) Veröffentlichungstag der Anmeldung: 06.10.1999
(73) Patentinhaber: AGA AKTIEBOLAG, 181 81 Lidingö (SE)
(72) Erfinder: FAERBER, Mark, D-22453 Hamburg (DE)
(74) Vertreter: Kasseckert, Rainer
(86) Internationale Anmeldenummer: PCT/EP1997/006171
(87) Internationale Veröffentlichungsnummer: WO 1998/019818

(56) Entgegenhaltungen:
- EP-A- 0 640 431
- DE-C- 4 315 849
- US-A- 3 066 215
- PATENT ABSTRACTS OF JAPAN vol. 011, no. 076 (M-569), 7.März 1987 & JP 61 232087 A (NIPPON KOKAN KK), 16.Oktober 1986,
- PATENT ABSTRACTS OF JAPAN vol. 008, no. 009 (M-268), 14.Januar 1984 & JP 58 173094 A (MITSUBISHI JUKOGYO KK), 11.Oktober 1983,
- PATENT ABSTRACTS OF JAPAN vol. 007, no. 193 (M-238), 24.August 1983 & JP 58 093592 A (MITSUBISHI JUKOGYO KK), 3.Juni 1983,
- PATENT ABSTRACTS OF JAPAN vol. 097, no. 012, 25.Dezember 1997 & JP 09 220682 A (NKK CORP), 26.August 1997,

## Beschreibung

Die Erfindung betrifft ein Verfahren zum Laserschweißen von metallischen Werkstücken aus Aluminium oder einer Aluminium-Legierung. Bei dem Verfahren wird die Schweißstelle von einem Prozeßgas umspült.

Laserschweißen ist aus offenkundiger Vorbenutzung bekannt. Dabei wird ein Laserstrahl auf das zu schweißende Werkstück fokussiert. Häufig wird der Schweißstelle gleichzeitig ein Prozeßgas zugeführt, das mehreren Anforderungen gerecht werden muß. Es soll einerseits die verwendeten Laseroptiken vor spritzern und Verunreinigungen schützen und andererseits unerwünschte Reaktionen der Umgebungsatmosphäre mit dem Schweißbereich verhindern oder begrenzen. In der Regel wird das Prozeßgas durch eine Düse koaxial zum Laserstrahl gerichtet zugeführt, u.U. kann jedoch statt dessen oder zusätzlich auch eine transversal zum Laserstrahl gerichtete zweite Düse Verwendung finden.

Als Prozeßgas werden im Stand der Technik in der Regel Inertgase verwendet. Stickstoff und Argon sind kostengünstig zur Verfügung stehende Gase, weisen allerdings den Nachteil auf, daß der Laserstrahl mit den Stickstoffmolekülen bzw. den Argonatomen wechselwirkt und so ein Prozeßgasplasma bildet, das bei vielen Anwendungen unerwünscht ist, da es den Wirkungsgrad des Schweißens verringert. Es werden daher häufig Prozeßgase verwendet, die etwa ≥ 30 % Helium in Argon enthalten. Helium unterdrückt eine Plasmabildung im Prozeßgas.

DE 43 15 849 C1 offenbart ein Verfahren zum Laserschweißen von Aluminium-Legierungen unter Verwendung eines Prozeßgases aus reinem Neon oder einem Gasgemisch aus Neon mit Argon, Helium, Stickstoff, Kohlendioxid, Wasserstoff und Sauerstoff.

JP-A-61 232 087 offenbart ein Verfahren zum Laserschweißen von Werkstücken aus Stahl, bei dem als Prozeßgas eine Edelgas-Stickstoff-Mischung verwendet wird. Aus Kostengründen wird Argon als Edelgas bevorzugt.

Der Erfindung liegt die Aufgabe zugrunde, ein Verfahren zum Laserschweißen der eingangs genannten Art zu schaffen, das ein effizientes Schweißen bei guter Schweißnahtqualität ermöglicht.

Die Erfindung löst diese Aufgabe dadurch, daß der StickstoffAnteil mindestens 0,5% Vol-% beträgt und der Edelgas-Anteil des Prozeßgases reines Helium ist.

Der Begriff "Prozeßgas" bezeichnet im Rahmen der Erfindung jede Gasmischung, die beim Laserschweißen dem Bereich der Schweißstelle zugeführt wird, beispielsweise um diesen Bereich vor der Umgebungsatmosphäre zu schützen.

Beim Laserschweißen kann die Energieübertragung vom Laserstrahl auf das zu schweißende Material auf zweierlei Weise erfolgen. Zum einen kann eine direkte Wechselwirkung der Laserstrahlung mit dem Werkstückmaterial erfolgen, das Werkstückmaterial verdampft bzw. es bildet sich ein Metalldampfplasma. Zum anderen kann die Laserstrahlung mit dem Prozeßgas wechselwirken, dieses ionisieren und so ein Prozeßgasplasma (nicht zu verwechseln mit dem Metalldampfplasma) bilden. Man bezeichnet diese Plasmabildung im Prozeßgas als Plasmafackel. Das Prozeßgasplasma wiederum überträgt dann einen Teil seiner Energie auf das Werkstück.

Die Plasmafackelbildung im Prozeßgas ist an und für sich unerwünscht, da sie den Wirkungsgrad des Laserschweißens vermindert. Inerte Gase, die nicht oder nur wenig zur Plasmabildung neigen, sind daher beim Laserschweißen bevorzugt. Reines Helium oder Helium-Argon-Gemische mit hohem Heliumanteil (beispielsweise 50-70 Vol.-%) werden daher im Stand der Technik häufig zum Laserschweißen verwendet (vgl. DE 43 29 127 A1).

Beim Auftreffen des Laserstrahls auf das Werkstück entsteht bei ausreichender Laserleistung ein sog. Keyhole, das durch spontanes Verdampfen des Werkstoffs entsteht und ein tiefes Eindringen des Laserstrahls in das werkstück begünstigt. Bei nicht 100%ig reinen Metallen oder bei Metallegierungen können Werkstoffanteile mit vergleichsweise geringem Siedepunkt im Laserstrahl explosionsartig verdampfen, die dadurch bewirkte Änderung der Druckverhältnisse kann unerwünschte Einschlüsse im Werkstück wie beispielsweise Poren verursachen. Besonders störend ist dies bei Werkstücken aus Aluminium und Aluminium-Legierungen. Aluminium siedet bei 2467°C, das in vielen Aluminium-Legierungen enthaltene Magnesium bereits bei 1107°C.

Die Erfindung hat erkannt, daß sich diese unerwünschten und die Schweißnahtqualität beeinträchtigenden Vorgänge durch das Hinzufügen von wenigstens 0,5 Vol.-% Stickstoff zu Helium zurückdrängen lassen. Der Stickstoffanteil wird durch den Laserstrahl in einem gewissen Umfang ionisiert und/oder dissoziiert. Es hat sich gezeigt, daß diese Prozeßgasplasmabildung das Schweißkeyhole stabilisiert und unerwünschte explosionsartige Verdampfungsvorgänge im Werkstück zurückdrängt. Die unmittelbare Wechselwirkung des Laserstrahls mit dem Metall wird etwas zurückgedrängt, die in einem gewissen Umfang auftretende Plasmafackel wirkt vermutlich als eine Art Puffer, der den Schweißvorgang vergleichmäßigt und so die Qualität der Schweißnaht wesentlich erhöht. Erfindungsgemäß nimmt man somit bewußt eine gewisse Wirkungsgradverschlechterung durch Plasmafackelbildung in Kauf, um eine qualitativ höherwertige Schweißnaht zu erhalten und eine gleichmäßige und sichere Prozeßführung zu ermöglichen.

Aus der bereits genannten DE 43 29 127 A1 ist es zwar bereits bekannt, beim Laserschweißen von Aluminium als Schutzgas ein Edelgas zu verwenden, das 80-250 vpm Stickstoff oder Lachgas enthält. Dieser Stand der Technik weist jedoch von der vorliegenden Erfindung weg, da er ausdrücklich sagt, daß bei einem Stickstoffgehalt von oberhalb 250 vpm sich Nahtaussehen und Nahtgütewerte verschlechtern. Die vorliegende Erfindung hat nun erkannt, daß sich überraschenderweise bei Stickstoffgehalten, die wenigstens um den Faktor 20 höher liegen als der in dieser Druckschrift offenbarte Maximalgehalt, im Gegenteil wesentlich verbesserte Nahtqualitäten ergeben. Unter anderem werden ein tieferer Einbrand und veränderte Porenbildung erzielt.

Der Edelgasanteil des Prozeßgases ist reines Helium. Helium ist durch den Laserstrahl nur sehr eingeschränkt ionisierbar, das Prozeßgasplasma bildet sich dann im wesentlichen durch Ionisation und/oder Dissoziation von Stickstoff.

Der Stickstoffgehalt beträgt vorzugsweise mindestens 1 Vol.-%, weiter vorzugsweise mindestens 3 Vol.-%, weiter bevorzugt mindestens 5 Vol.-%, besonders bevorzugt 10-50 Vol.-%. Noch weiter bevorzugt ist der Bereich 10-30 Vol.-%.

Beim Schweißen von Aluminium und Aluminiumlegierungen hat sich ein Stickstoffgehalt von 10-15 Vol.-% als vorteilhaft herausgestellt. Bei einem zu hohen Stickstoffgehalt kann es zu einer unerwünschten Nitridbildung kommen, die die dynamischen und statischen Festigkeitskennwerte der Schweißverbindung beeinträchtigen kann.

Das erfindungsgemäße Verfahren wird zum Schweißen metallischer Werkstücke aus Aluminium oder einer Aluminiumlegierung eingesetzt. Solche Legierungen sind beispielsweise AlMgMn, AlMgSi, AlMg und AlZnMg. Bei der Verwendung eines Nd:YAG-Lasers mit einer Strahlleistung von 3kW können beispielsweise bis zu 5 mm dicke Werkstücke aus diesen Legierungen mit Geschwindigkeiten von 2-12 m pro Minute geschweißt werden.

Ein Ausführungsbeispiel der Erfindung wird im folgenden anhand der Zeichnung erläutert, die schematisch wesentliche Elemente einer Schweißvorrichtung zur Durchführung des erfindungsgemäßen Verfahrens zeigt.

Ein Laserstrahl 1 wird mittels einer Fokussierlinse 2 auf das zu schweißende Werkstück 6 gerichtet. Dabei tritt er durch eine Düse 3 und deren Mundstück 11 hindurch. Der Laser selbst ist in der Zeichnung nicht dargestellt, geeignete Laser sind dem Fachmann geläufig. Beispielsweise kann ein CO₂-Laser oder Feststofflaser wie z. B. ein Nd:YAG-Laser verwendet werden. Geeignete Strahlleistungen liegen beispielsweise im Bereich 1 - 3 kW. Größere Laserleistungen sind ggf. ebenfalls anwendbar, jedoch werden dann bevorzugt Spiegeloptiken zur Fokussierung des Laserstrahls verwendet. Die Fokussierlinse 2 fokussiert den Laserstrahl auf die Oberseite des zu schweißenden Werkstücks 6. Der Durchmesser der Öffnung des Düsenmundstücks 11 kann im Bereich 3 - 15 mm, vorzugsweise 7 - 10 mm liegen. Der Abstand des Düsenmundstücks 11 von der Oberfläche des Werkstücks 6 liegt bevorzugt im Bereich 10 - 15 mm.

Die Düse 3 weist eine Zufuhrleitung 5 auf, durch die Prozeßgas in eine Kammer 4 geführt wird. Als Prozeßgas wird eine He-N₂-Mischung mit einem Stickstoffanteil von 10 Vol. -% verwendet. Die zugeführte Prozeßgasmenge beträgt vorzugsweise 30 l/min (gemessen unter Normbedingungen).

Das zu schweißende Blech 6 stützt sich auf einer Tragvorrichtung 9 ab. Die Düse 3 kann zur Konstanthaltung bzw. Regelung des Arbeitsabstandes mit einem Abstandssensor 7 (bspw. einer induktiven Abstandssensorik) ausgerüstet sein.

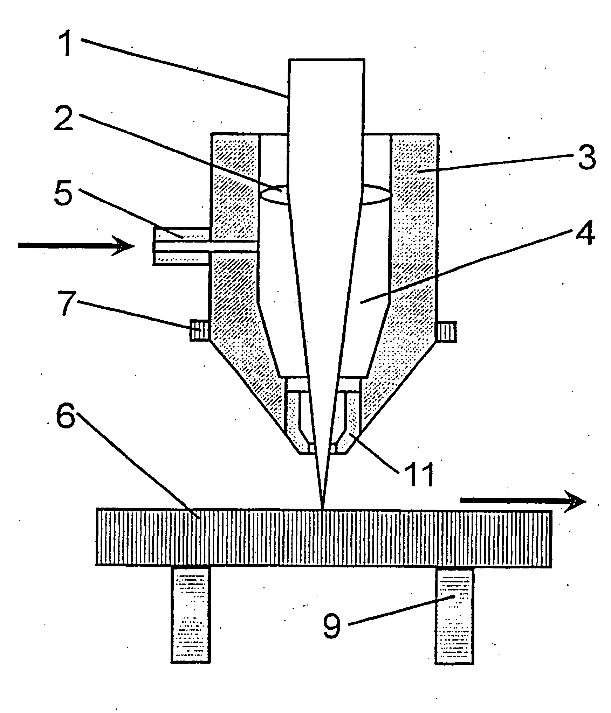

Bei dem Schweißvorgang wird das Blech 6 mit einer Geschwindigkeit von z. B. 6 m/min in Richtung des in Fig. 1 gezeigten Pfeils durch die Schweißvorrichtung geführt. Der größte Teil der Energie des Laserstrahls 1 wechselwirkt unmittelbar mit dem Material des Blechs 6 im Bereich der Schweißstelle. Eine Wechselwirkung des Laserstrahls mit dem Prozeßgas durch Dissoziation und Ionisation des Prozeßgases und daraus resultierende Plasmabildung tritt eingeschränkt auf in dem Maße, daß eine Stabilisierung des Schweißkeyholes erzielt wird. Besonders bemerkbar macht sich diese vorteilhafte Wirkung der Erfindung, wenn mit hohen Laserleistungen über 3 kW (und dementsprechend Spiegeloptiken zur Fokussierung) und einer dementsprechend hohen Leistungsdichte im Bereich der Schweißstelle gearbeitet wird.

Im Rahmen der Erfindung kann das Prozeßgas auch anders zugeführt werden, beispielsweise über eine in der Zeichnung nicht dargestellte, seitlich angeordnete Düse. Eine solche Düse kann entweder zusätzlich oder anstelle der Düse 3 vorgesehen sein.

## Patentansprüche

1. Verfahren zum Laserschweißen von metallischen Werkstükken aus Aluminium oder einer Aluminium-Legierung, bei dem die Schweißstelle von einem Prozeßgas umspült wird, wobei als Prozeßgas eine Edelgas-Stickstoff-Mischung verwendet wird, **dadurch gekennzeichnet, daß** der Stickstoff-Anteil mindestens 0,5 Vol.-% beträgt und der Edelgas-Anteil des Prozeßgases reines Helium ist.

2. Verfahren nach Anspruch 1, **dadurch gekennzeichnet, daß** der Stickstoffgehalt des Prozeßgases mindestens 1 Vol.-%, vorzugsweise mindestens 3 Vol.-%, weiter vorzugsweise mindestens 5 Vol.-%, besonders bevorzugt 10 - 50 Vol.-% beträgt.

## Claims

1. Method for the laser welding of metallic workpieces made from aluminium or an aluminium alloy, in which a process gas is flushed around the welding location, the process gas used being a noble gas-nitrogen mixture, **characterized in that** the nitrogen content is at least 0.5% by volume and the noble gas content of the process gas is pure helium.

2. Method according to Claim 1, **characterized in that** the nitrogen content of the process gas is at least 1% by volume, preferably at least 3% by volume, more preferably at least 5% by volume, particularly preferably 10-50% by volume.

## Revendications

1. Procédé de soudage au laser de pièces métalliques en aluminium ou en un alliage d'aluminium, dans lequel un gaz de procédé s'écoule autour de l'endroit de soudage, en utilisant un mélange de gaz noble/azote en tant que gaz de procédé, **caractérisé en ce que** la proportion d'azote est d'au moins 0,5 % en volume et la proportion de gaz noble du gaz de procédé est constituée d'hélium pur.

2. Procédé selon la revendication 1, **caractérisé en ce que** la teneur en azote du gaz de procédé est d'au moins 1 % en volume, de préférence d'au moins 3 % en volume, plus préférablement d'au moins 5 % en volume, particulièrement préférablement de 10 à 50 % en volume.
